(19) Europäisches Patentamt — European Patent Office — Office européen des brevets

(11) **EP 3 857 861 B1**

(12) **EUROPEAN PATENT SPECIFICATION**

(45) Date of publication and mention
of the grant of the patent:
**12.06.2024 Bulletin 2024/24**

(21) Application number: **19809912.9**

(22) Date of filing: **30.09.2019**

(51) International Patent Classification (IPC):
**H04L 67/125** *(2022.01)*   **H04L 67/51** *(2022.01)*
**H04W 4/70** *(2018.01)*   *H04L 67/025* *(2022.01)*
*H04L 69/329* *(2022.01)*

(52) Cooperative Patent Classification (CPC):
**H04L 67/125; H04L 67/51; H04W 4/70;**
H04L 67/025; H04L 69/329

(86) International application number:
**PCT/IB2019/001163**

(87) International publication number:
**WO 2020/065410 (02.04.2020 Gazette 2020/14)**

(54) **DISCOVERY OF INTERNET-OF-THINGS RESOURCES**

ENTDECKUNG VON INTERNET-DER-DINGE-RESSOURCEN

DÉCOUVERTE DES RESSOURCES DE L'INTERNET DES OBJETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2018 PCT/CN2018/108840**

(43) Date of publication of application:
**04.08.2021 Bulletin 2021/31**

(73) Proprietor: **Orange**
**92130 Issy-les-Moulineaux (FR)**

(72) Inventors:
• **WU, Si**
**Beijing 100013 (CN)**
• **GUO, Zhihong**
**Beijing 100013 (CN)**

(74) Representative: **Cabinet Beau de Loménie**
**158, rue de l'Université**
**75340 Paris Cedex 07 (FR)**

(56) References cited:
**US-A1- 2015 019 342**

• **NEC EUROPE LTD: "NGSI Entity Resolution and Federation", ETSI DRAFT; CIM(17)009003R1, EUROPEAN TELECOMMUNICATIONS STANDARDS INSTITUTE (ETSI), 650, ROUTE DES LUCIOLES ; F-06921 SOPHIA-ANTIPOLIS ; FRANCE , 11 April 2017 (2017-04-11), pages 1-21, XP014290443, Retrieved from the Internet: URL:docbox.etsi.org\ISG\CIM\05-Contributio ns\2017\CIM(17)009003r1_NGSI_Entity_Resolu tion_and_Federation.pdf [retrieved on 2017-04-11]**
• **MUHAMMAD GOLAM KIBRIA HANKUK UNIVERSITY OF FOREIGN STUDIES KOREA (REP OF): "New proposal for clause XX of D3.3 (Framework to support data interoperability in IoT environments);DPM-I-084", ITU-T DRAFT; STUDY PERIOD 2017-2020; FOCUS GROUP DPM; SERIES DPM-I-084, INTERNATIONAL TELECOMMUNICATION UNION, GENEVA ; CH , vol. dpm 18 October 2017 (2017-10-18), pages 1-8, XP044242834, Retrieved from the Internet: URL:https://extranet.itu.int/sites/itu-t/f ocusgroups/dpm/Input/DPM-I-084.docx [retrieved on 2017-10-18]**

**(Cont. next page)**

- **SHINOZAKI TETSUO ET AL: "IoT-aware Context Respectful Counseling Agent", 2016 IEEE INTERNATIONAL CONFERENCE ON SYSTEMS, MAN, AND CYBERNETICS (SMC), IEEE, 9 October 2016 (2016-10-09), pages 4729-4736, XP033060882, DOI: 10.1109/SMC.2016.7844978 [retrieved on 2017-02-06]**

## EP 3 857 861 B1

**Description**

The present invention relates to the field of the Internet of Things (IoT). More particularly, the invention relates to systems and methods providing discovery of IoT resources.

Incidentally, in this document the expression "IoT resources" refers to IoT objects and to services provided by IoT objects. Moreover, the expression "IoT object" refers to connected IoT devices (e.g. a connected beverage machine, a connected air conditioning unit, etc.) as well as to unconnected objects (e.g. a swimming pool, a printing shop, etc.), and "connected" refers to the object in question having a connection to a communications network (e.g. telecommunications network, computer network, LAN, WAN, short-range connection technology such as Bluetooth, etc.)

The Internet of Things is becoming progressively better established, and increasing numbers of IoT devices are being brought into operation.

To facilitate the sharing of information regarding IoT devices, an information model called NGSI has been developed to standardize the structure of context information relating to entities in the Internet of Things. The document "NGSI Entity Resolution and Federation" (ETSI Draft, CIM(17)009003R1, 11 April 2017, pages 1-21, presented by NEC Europe Ltd., proposes a format for NGSI entity information as well as architectures to enable searches to be performed for context information relating to IoT entities. According to this draft, IoT entities report their contexts to a context management component which registers and indexes the context information reported by the IoT entities. With this system, a request may be made to determine the context information applicable to (i) an IoT entity whose ID code is known, (ii) IoT entities whose ID code starts with a particular prefix (pattern), or (iii) IoT devices of a "type" that has a particular attribute (e.g. type=smoke sensors).

To facilitate the development of the Internet of Things, it becomes important to provide mechanisms to enable IoT resources to be discovered automatically. For instance, IoT devices may need to discover other IoT resources in order to be able to collaborate in performance of some service. As another example, a user may not know what IoT resources are available to them at a particular moment and, because of this ignorance, may fail to make use of an IoT resource which was available.

One approach would be to provide mechanisms to inform a user device (e.g. a mobile terminal) of all the IoT resources that are present in the user's environment at a given time so that the user may be alerted to the existence of those resources, e.g. by display on the user device of an exhaustive list of IoT objects and services. However, in an environment that is well-populated with IoT resources this can lead to a user being presented with a long list of IoT resources and the user needs to expend time and effort in examining the different available resources and finding out how to access a selected resource.

Request-based systems have been proposed to enable a search to be made, by devices or by human users, for IoT resources of specified type. For example, systems have been proposed to recommend IoT devices by matching the semantic similarity between a device service description and a search request, in which the device service description is exposed by Service Oriented Architecture (SOA). One such proposal is described in "Efficient semantic-based IoT service discovery mechanism for dynamic environments" by Sameh Ben Fredj, Mathieu Boussard, Daniel Kofman, and Ludovic Noirie (IEEE 25th Annual International Symposium on Personal, Indoor, and Mobile Radio Communication (PIMRC), 2014, Sep 2014, Washington, United States. pp.2088 - 2092, 2014). Another proposal in this regard, "Semantic-based IoT device discovery and recommendation mechanism" by Stefana Chirila, Camelia Lemnaru and Mihaela Dinsoreanu (IEEE ICCP 2016), describes a broker-based architecture to recommend devices by semantically matching web service discovery and a requester's requirements. Yet another request-based approach, which supports discovery of web objects based on semantic matchmaking and constraints, was proposed by Muhammad Golam Kibria et al in "New proposal for clause XX of D3.3 (Framework to support data interoperability in IoT environments); DPM-I-084", ITU-T Draft, Study period 2017-2020, Focus group DPM, Series DPM-I-084, International Telecommunication Union, Geneva.

The above-mentioned publications describe techniques for finding semantically-matched IoT devices but, in the case where the requester looking for IoT resources is a human user, they place a high burden on the user to articulate their requirements, notably using programming language.

Moreover, in the prior proposals, device discovery is based on the premise that each device exposes its function or service using the SOAP or WSDL protocols. However, because of the diversity in different IoT devices and their manufacturers, in the real world this criterion is not always satisfied. US 2015/019342 A1 discloses a user context-aware recommendation engine based on a user Internet of Things environment.

The present invention has been made in the light of these issues. The present invention is defined by the appended claims.

The objects claimed in the appended claims reduce the burden on a user who wishes to discover IoT resources that meet their requirements. The user is provided with a user-friendly, intelligent and targeted discovery technique which is able to determine user requirements from the user context as well as from explicit user input (when the latter is provided).

Further features and advantages of embodiments of the present invention will become apparent from the following description of said embodiments, which is given by way of illustration and not limitation, illustrated by the accompanying drawings, in which:

> Fig.1 illustrates an example of an IoT-resource discovery system according to a first embodiment of the invention;
> Fig.2 illustrates an example implementation of the system illustrated in Fig.1;
> Fig.3 is a diagram schematically representing a knowledge-graph-based reasoning engine;
> Fig.4 is a flow diagram illustrating steps in an example of a discovery method, implemented by a system, according to an embodiment of the invention;
> Fig.5 is a diagram illustrating interactions between elements implementing a discovery method according to an embodiment of the invention;
> Fig.6 is a flow diagram illustrating steps in an example of a method according to an embodiment of the invention, implemented by server apparatus; and
> Fig.7 is a flow diagram illustrating steps in an example of a method according to an embodiment of the invention, implemented by a user client in a user device.

Certain embodiments of the invention will now be described for the purposes of illustration, not limitation.

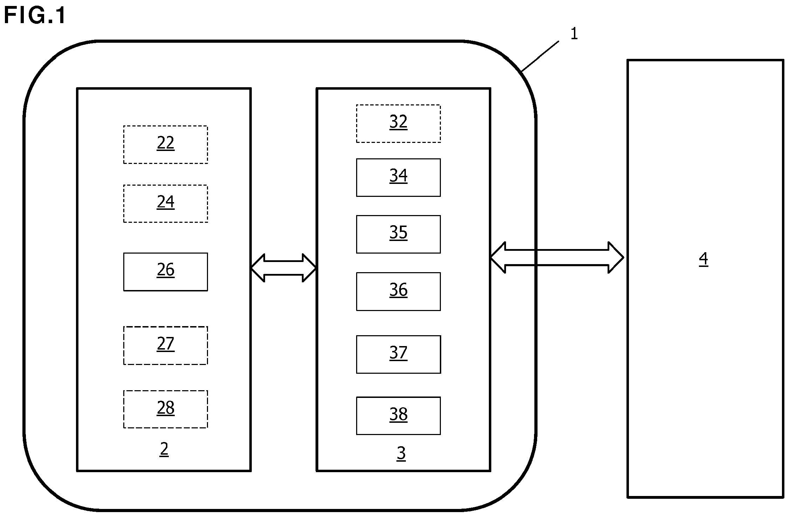

**Fig.1** illustrates a discovery system 1 according to a first embodiment of the invention. The system illustrated in Fig.1 has a C/S (Client/Server) architecture. The main components of the discovery system 1 are a user client 2, and server apparatus 3. In practice, server apparatus 3 typically serves a plurality of user clients 2 provided in respective user devices. The discovery system 1 provides the user with awareness of the surrounding IoT environment, and may provide the user with access to a desired IoT resource (IoT object or object service), by analyzing user requirements that have been articulated (in some form) by the user and/or that have been inferred or deduced by analyzing the user context.

The user client 2 is implemented in a user device, for example in a mobile phone, tablet, personal computer, and so on. The user client 2 is often provided in the form of a computer program that contains instructions which, when executed by one or more processors of the user device, cause the user device to perform the functions described below as belonging to the user client and cause the user device to embody the functional units described below as belonging to the user client 2. However, the user client may be implemented using general or dedicated hardware components, optionally associated with software. The user client 2 may cooperate with other functional units provided in the user device including, but not limited to, storage units, communication interfaces, and units of the user device which generate data characterizing the user context (e.g. ambient temperature, humidity or other aspects of the user's environment, the user's location, and so on).

In Fig.1 the server apparatus 3 is illustrated as a monolithic block. However, it will be understood that, in practice, server apparatus 3 may be implemented using various different configurations of software and physical hardware. Thus, for example, the functions and units described below as belonging to server apparatus 3 may be provided using a single server device, by a group of servers cooperating with one another, by one or plural server apparatuses cooperating with external components, and so on, in each case with its/their associated software. Cloud infrastructure may be used to implement the server apparatus 3.

Server apparatus 3 is configured to interrogate one or more IoT-object platforms to detect wanted IoT objects. In addition, server apparatus 3 may be configured to interact with the one or more IoT-object platforms to enable detected IoT objects to be accessed. Server apparatus 3 may be configured to interrogate one or more IoT-object platforms, which may be the same as or different from the platform(s) interrogated to detect wanted IoT objects, to retrieve user-context data generated by IoT devices. Typically, the discovery system 1 is separate from, but interacts with, such IoT-object platforms but, if desired, an integrated system may be constructed which includes the discovery system 2, 3 and one or more IoT-object platforms. Fig.1 illustrates an example in which server apparatus 3 interacts with a single IoT-object platform 4 which is external to the discovery system 1.

The user client 2 comprises a user input interface 22 to receive user input indicative of a user requirement and a transmission unit 24 to output information representative of the user input. The user client 2 comprises a reception unit 26 to receive information identifying IoT resources adapted to satisfy user requirements. The user client may further include a client-side user-context identification unit 27, and/or a communications unit 28 configured to communicate with IoT objects in the vicinity of the user device. Some or all of the units 22-28 may be implemented using a common component: for example, a single unit may perform the transmission, reception and communication functions of units 24, 26 and 28.

Typically, the user input interface 22 makes use of user-operated components provided on the user device, e.g. buttons, keys, touch-screen, and so on, via which the user can input a requirement or request. The user client 2 may display a graphical user interface (not shown) to enable (or prompt) the user to input a request or requirement that can be fulfilled using IoT resources.

Typically, the transmission unit 24 and reception unit 26 of the user client 2 make use of communications interfaces and components of the user device to send information to, and receive information from, server apparatus 3

and connected IoT objects.

The server apparatus 3 comprises an input interface 32 to receive information from the user client 2, notably information representative of user input to the user client 2. The server apparatus 3 comprises a user-context determination unit 34 to determine the user context, a user-requirement assessment unit 35 to determine a user requirement specification, a category identification unit 36 to identify one or more categories of IoT object that match the user requirement specification, an IoT-object-platform interface 37 to interrogate the IoT-object platform 4, to identify IoT resource(s) that correspond to the identified one or more categories of IoT object, and an output unit 38 to send, to the user client, information identifying the IoT resource(s) identified by the Iot-object-platform interface 37.

Some or all of the units 32-38 may be implemented using common components: for example, a single unit may perform the input and transmission functions of units 32 and 38.

The user-context determination unit 34 is designed to obtain information, regarding aspects of the user context, from different sources. Thus, for example, user-context data may be obtained from the user client 2, from IoT objects, from the IoT-object platform 4, from external (third party) sources, and so on. The user client 2 may provide server apparatus 3 with additional context data, for example a user profile, environmental information obtained by sensors in the user device, and so on. For this purpose, the user client 2 may comprise a client-side user-context identification unit 27 to output, to the server apparatus 3, information indicative of at least one aspect of the user context.

The user client 2 may further include the above-mentioned communications unit 28 and may use the communications unit 28 to interrogate IoT devices local to the user device. This interrogation may serve, for example, to locate IoT devices capable of providing information regarding the user's current context (e.g. the environment in which the user device is currently located). The user client 2 may simply determine which IoT devices are potential sources of context information, and notify the server apparatus 3 of the identity of the relevant potential sources, or the user client may be configured to itself obtain context data from the relevant IoT devices and then to forward the acquired context information to the server apparatus 3.

The user-context determination unit 34 may be configured to acquire user-context data from potential sources identified by the user client 2. Typically, the user-context determination unit 34 may be configured to interrogate an IoT-object platform to retrieve information, indicative of at least one aspect of the user context, generated by the potential sources which have been notified to it by the user client 2.

The user-context determination unit 34 may be configured to acquire data indicative of the user device's current location, for example GPS data generated by a GPS sensor in the user device and transmitted to the server apparatus 3. The user-context determination unit 34 may be configured to contact sources of information to find about the context applicable at this location, e.g. sources of (current, forecast and/or historic) environmental data, sources of directory information regarding devices, businesses, service-providers, points of interest and so on at or near the location. These sources may be external third-party resources (contactable by any convenient means, e.g. over a communications network), or IoT objects (contactable either directly by the server apparatus 3 or via an IoT-object platform).

The user-context determination unit 34 may combine data obtained from any desired combination of sources to generate a definition of the "current" user context, or the user context at some target time. Among others, these sources may be a user profile stored in a database of the network (possibly storing information about user's habits) or information from a social network (for instance hot trends from twitter).

The user-requirement assessment unit 35 functions to produce a user-requirement specification, based on the user-context determined by the user-context determination unit 34. Further, if the user client 2 has provided information from which a user requirement can be determined, the user-requirement assessment unit 35 may take this information into account when producing the user-requirement specification. The invention is not particularly limited having regard to the parameters included in the user-requirement specification nor having regard to the manner in which the specification is expressed. Some examples are described below but it is to be understood that variants can be designed in accordance with the technologies used to implement the category identification unit 36.

The user-requirement assessment unit 35 may comprise a natural-language analysis tool to determine user requirements by processing user input, thus enabling the user to express their wishes using natural language. The user-requirement assessment unit 35 may be implemented using various technologies, as described below, including, but not limited to a natural language processing tool, performing text recognition or semantic entity analysis for instance.

The category identification unit 36 compares the user requirement specification produced by the user-requirement assessment unit 35 with IoT object categories so as to identify categories of IoT objects/resources which meet the user's requirements. The category identification unit 36 may be implemented using various technologies, as described below, including, but not limited to a cognitive reasoning engine and a collaborative filtering unit.

The Iot-object-platform interface 37 is designed to interrogate the IoT-object platform 4, requesting the IoT-object platform 4 to provide details of IoT resources known to the platform which fall into the categories identified by the category identification unit 36. The IoT-object-platform interface 37 may comprise a semantic matching unit (not shown) to determine semantically matched IoT object categories in the IoT-object platform 4 for given object categories of the category identification unit 36. The request sent to the IoT-object platform can thus evoke categories that are known to the platform. As stated earlier, there may be plural IoT-object platforms and the server apparatus 3 may be configured to interrogate all or a desired selection of the IoT-object platforms in order to discover IoT resources to notify to the user.

The output unit 38 operates to send, to the user client 2, information regarding the IoT resources located by the server apparatus 3 as a result of its interrogation of the IoT-object platform. The server apparatus 3 may be configured so that it does more than simply notify the user client of all the results returned by the IoT-object platform 4. Thus, for example, the output unit 38 may restrict the results returned to the user client 2 to those which are effectively usable by the user.

For example, if some IoT resources which otherwise match the user's requirements are only usable by authorized people, then a check may be made as to whether or not the user is authorized to use the resource and, if not, the IoT resource in question may be omitted from the results returned to the user client 2.

As another example, the server apparatus 3 and/or IoT-object platform 4 may be configured to generate information (operating instructions, access codes, communication frequencies, encryption keys, and so on) which is necessary or helpful in order for the user to be able to access a given IoT resource.

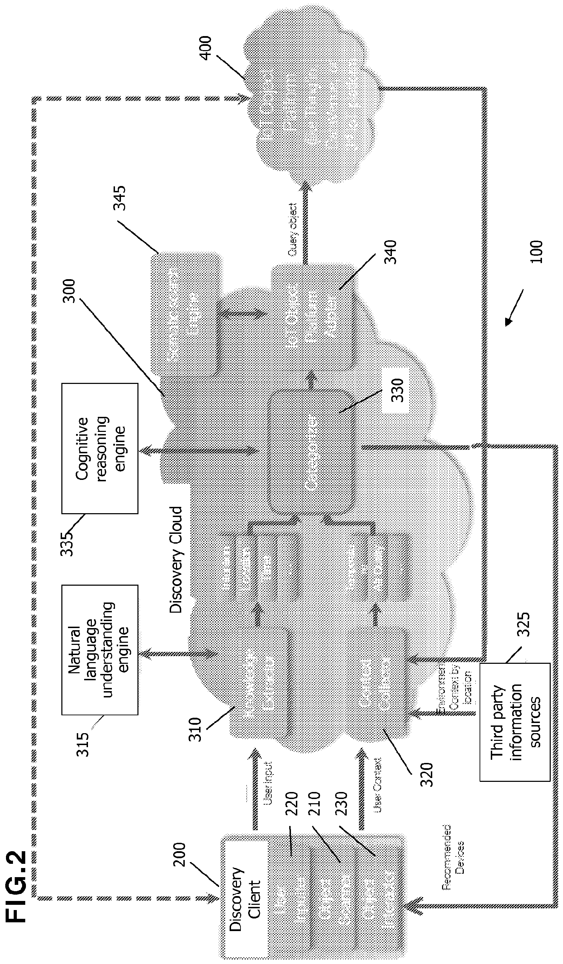

Fig.2 illustrates the architecture of a discovery system 100 which is one example of a specific embodiment of the system according to Fig.1. According to this example the server apparatus is implemented using cloud infrastructure and is called a "discovery cloud".

In the system 100 according to the example of Fig.2, the user client 200 is responsible for scanning the nearby connectable IoT devices, collecting user input and context, getting IoT resource data from the discovery cloud and helping the user to access the identified IoT objects. The main functional modules are:

210 Object Scanner - Utilizes the client device's radio connection, including WIFI, Bluetooth, GPS and etc., to scan nearby connectable devices to get possible contextual data around the user: for instance, like user's current location via GPS, open data of nearby temperature or humidity monitoring devices directly retrieved by WIFI or Bluetooth connection.

220 User Inputter - With user authorization, the user inputter 220 collects user input and user context from the client side, which will be sent to the discovery cloud so that suggestions of suitable IoT objects can be obtained. Wherein:

* The user inputs their requirement(s) by text or voice. For instance: "I want to have dinner at place A tomorrow at noon". If the user input is voice, this will first be converted to text by a STT (Speech-To-Text) converter (not shown).
* User context can come from several sources, including data from the object scanner 210, for example: user's current location via GPS, temperature data from a nearby shared thermometer, or even personal data, like the occupation, age, gender, etc. The collection of this data can be made subject to user authorization. The collected data is then sent to the discovery could for analysis

230: Object Interactor - Based on the knowledge retrieved from the IoT Object Platform by the discovery cloud, the object interactor retrieves IoT objects' information, presents it to the user and helps the user to connect to IoT objects' services.

The discovery cloud 300 comprises a knowledge extractor 310 to analyze user's requirements as expressed in input that may be received from the user client, and a context collector 320 to establish and replenish user context data. The data provided by the knowledge extractor 310 and context collector 320 defines a requirement specification. The discovery cloud further comprises a categorizer 330 which, based on the requirement specification, deduces what kinds of IoT objects may interest the user, and an IoT-object platform adapter 340 to query the IoT-object platform to find out corresponding objects and return them back to the user client.

These different modules of the discovery cloud 300 are as follows:

310 Knowledge Extractor - From user's input (texts, or texts converted from voice) sent by the user client, analyzes user's requirement to obtain:

* User intention: for instance, the intention "printing" may be determined for input "I want to print my photo", the intention "eating" may be determined for input "I am hungry", the intention "cooling" may be determined for input "it is too hot", etc.
* Target entities, including target location, target time, target person, etc. For example, in a case where the user input is "I want to have a dinner at place A tomorrow noon", then the knowledge extractor may determine that the intention is "eating", the target location is "place A", and the target time is "tomorrow noon"

The knowledge extractor 310 may make use of a natural language processing tool 315, such as IBM's waston, Google's ALAPI etc.

320 Context Collector - Replenishes user context from multiple sources, including:

* Authorized user data from the user client, including user location, user profile (optional, such as occupation, age, gender, etc.)
* Environment data: such as weather, temperature, humidity, air quality, etc., which may be:

- - data of shared nearby devices found and retrieved directly by the user client
- - data of shared nearby devices found by the user client, but data is retrieved from IoT object platform
- - data from 3$^{rd}$ party information sources 325, for instance Yahoo weather service, etc., according to user context and/or requirements (e.g. user's current location, a target location, etc.),

330 Categorizer - According to analysis of user-expressed requirements, collected user contexts, etc. the categorizer 330 deduces what kinds of IoT objects may interest the user (notably may meet the user requirements). For example, the categorizer may establish a list of object categories corresponding to the types of object adapted to satisfy the user's requirements. The categorizer 330 may comprise, or communicate with, a cognitive reasoning engine 335.

The cognitive reasoning engine 335 may be implemented in various forms including, but not limited to, the following options:
- a rule-based reasoning engine, using preset rules to deduce the category list. Typically, the rules applied by the rule-based reasoning engine are manually created. Table 1 below provides two examples of such rules.

Table 1

| Rule name | Condition | Categories of Object |
|-----------|-----------|----------------------|
| "too hot" | context: temperature>30 degrees | [air conditioner, cool water machine] |
| "print" | intention = printing | [printer, printing shop] |

- a knowledge-graph-based reasoning engine, using a knowledge graph to deduce categories from information gathered from a variety of sources. Knowledge graphs are known; for example, they are described in Wikipedia (see https://en.wikipedia.org/wiki/Knowledge_Graph), and in the blog post entitled "Introducing the Knowledge Graph: Things, Not Strings" by Singhal, Amit (May 16, 2012, Google Official Blog), and so no additional details are provided here.

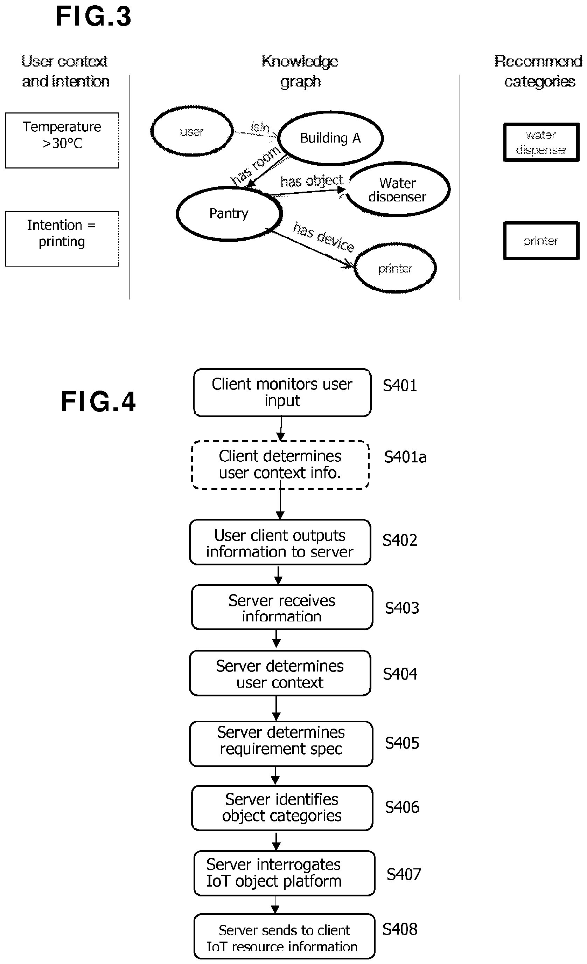

**Fig.3** illustrates schematically an example of a knowledge graph for use in identifying IoT object categories based on a given user context and user intention. In this example the knowledge graph encodes knowledge regarding a room (a pantry) in a building A, as well as knowledge of the objects and devices in this pantry.

Other widely-used methodologies may be exploited by the categorizer 330, including:

-- Personalized selection - select IoT object categories according to a user profile (if it is authorized), for example: select a connected coffee machine for white-collar staff if the time is 10:30 am or 13:00 pm, based on knowledge of the user's prior behavior; and

- Collaborative Filtering - collaborative filtering encompasses techniques for matching people with similar interests and selecting object categories on this basis, for example: at place A select the devices most-accessed by people at place A; if the user has accessed device B, select the most popular devices that users access if they have accessed device B.

340 IoT-object platform adapter - The device categories in the result produced by the categorizer 330 may not conform to those category definitions which are used in the IoT-object platform 400. If the IoT-object platform 400 does not support semantic searching for IoT objects, the IoT-object platform adapter 340 may provide a mechanism as a module to match two different sets of device category definitions, so the discovery cloud 300 can query corresponding devices from the IoT-object platform 400.

A simple way to realize the IoT-object platform adapter 340 is to build a map between two different sets of device category definitions. This needs to be done case by case, e.g. build different mappings for different IoT-object platforms.

A semantic matching engine 345, using vector representation for word/document methods, may be employed by the IoT-object platform adapter 340. Examples of suitable methods include, but are not limited to:

- Word2Vec (described in the following papers: "Efficient Estimation of Word Representations in Vector Space" by Tomas Mikolov, Kai Chen, Greg Corrado, and Jeffrey Dean, in Proceedings of Workshop at ICLR, 2013; and "Distributed Representations of Words and Phrases and their Compositionality." by Tomas Mikolov, Ilya Sutskever, Kai Chen, Greg Corrado, and Jeffrey Dean in Proceedings of NIPS, 2013);

- Doc2Vec (described in Distributed Representations of Sentences and Documents" by Quoc Le and Tomas Mikolov);
- fastText (described at https://research.fb.com/fasttext); and
- GloVe (described at https://nlp.stanford.edu/projects/glove in "Global Vectors for Word Representation" by Jeffrey Pennington, Richard Socher, and Christopher D. Manning)

The IoT-object platform adapter 340 may adopt such methods to find semantically matched device categories in the IoT-object platform 400 for a given device category provided by the categorizer 330, via comparing the semantic similarities between two category names or descriptions (if the IoT-object platform provides category description):

- Word Similarity: similarity of category's name phases using word's vector representations, like Word2Vec, fastText, etc. For example, for category A and category B, the word similarity is given by the following expression:

$$word\_similarity(A, B) =$$
$$cosine\_similarity\ (vector(A's\ name\ phase),\ vector(B's\ name\ phase))$$

- Document Similarity: similarity of category's description using sentence vector representations, like Doc2Vec, fastText, etc. For example, for category A and Category B, the document similarity is given by the following expression:

$$doc\_similarity(A, B) =$$
$$cosine\_similarity(vector(A's\ description\ sentences),\ vector(B's\ description\ sentences))$$

The cosine similarity metric is well-known and is, for example, described at https://en.wikipedia.org/wiki/Cosine similarity; accordingly no further details are provided here.

400 - IoT Object Platform. The IoT-object platform 400 provides direct access to IoT object data and services, or knowledge to access IoT object data and services. Examples of IoT object platforms with which the invention may be used include, but are not limited to, Thing'in provided by Orange, DataVenue provided by Orange, and other $3^{rd}$ party platforms.

**Fig.4** is a flow diagram illustrating steps in a discovery method according to the invention, which may be implemented by a discovery system comprising a user client and server apparatus.

In the method of Fig.4, user input to a user client implemented on a user device is monitored (S401), and the user input may be indicative of a user requirement. Optionally, the user client may determine an information item representative of the user context. Responsive to the monitoring (and determining of context, if performed), information representative of the user input (and user context) is output to the server apparatus (S402). The server apparatus: receives the information representative of user input (and user context information, if any is transmitted) from the user client (S403), determines the user context (S404), and determines a user requirement specification based on the determined user context and, in the case where information representative of user input has been received from the user client, additionally based on this received information (S405). The server apparatus identifies one or more categories of IoT object that match the user requirement specification (S406), interrogates an IoT-object platform to identify IoT resource(s) that correspond to the identified one or more categories of IoT object (S407), and sends, to the user client, information identifying the IoT resource(s) detected by the interrogating of the Iot-object-platform (S408).

In the method of Fig.4, the server apparatus may make a determination as to which of the IoT resources identified by interrogating the IoT-object platform are effectively available to the user (e.g. excluding resources which are offline, powered-down, malfunctioning and/or not authorized for use by the user). In such a case, in step S408 the server apparatus may only send the user client details of the effectively available IoT resources (to save communications bandwidth).

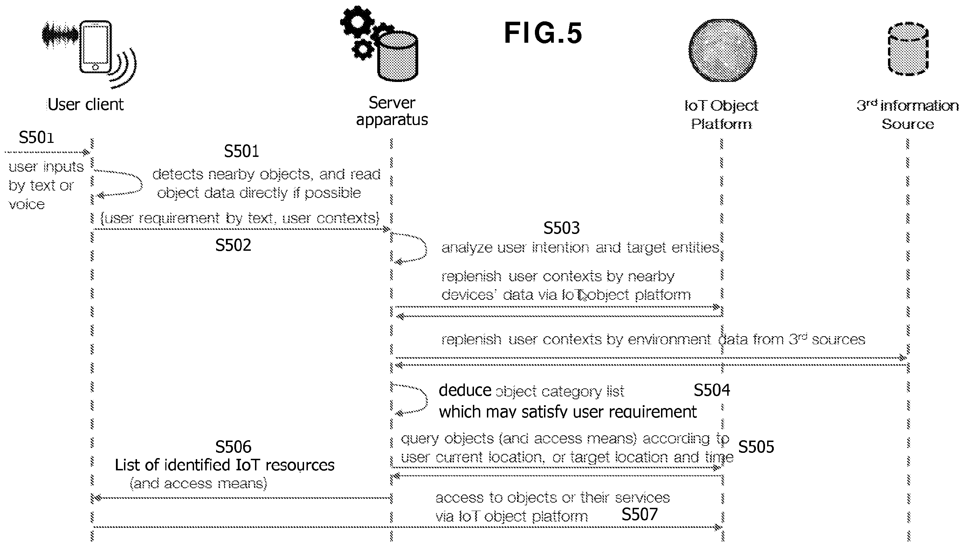

**Fig.5** illustrates a typical workflow in an example embodiment of the above-described system and method.

Step S501. The whole procedure may be triggered by various events/actions including, but not limited to: user input of their requirement to find something on the user client, a successful data retrieval of a specific IoT object (e.g. a shared electric thermometer) during a regular scan of nearby IoT objects by the user client, an IoT-resource discovery request by the user client under some preset rule (e.g. a rule "request every half hour"), etc.

Step S502. The user client sends information regarding the user requirement in text form (if user input is via voice, this is first be converted to text), and sends user context (including retrieved nearby object data, user current location, authorized user personal data) to the server apparatus, so as to obtain information regarding IoT resources.

Step S503. After receipt of the user request and data from the user client, the server apparatus analyzes the user intention and target entities from the user input (if there are user inputs), and replenishes user contexts by retrieving, from the IoT object platform, possible open data of objects near the user, or environment data from the open 3$^{rd}$ party sources.

Step S504. According to the user intention and target entities (if there are some), and user contexts obtained by Step S503, the server apparatus deduces object categories which may satisfy the user's requirements, by a methodology which may include cognitive reasoning, etc. as noted above.

Step S505. The server apparatus queries the IoT-object platform (with or without an Iot-object-platform adapter) to find matched IoT objects, according to the deduced object categories obtained by Step S504, and some complementary conditions (which could, for example, be the user's target location and time (if these exist), or it could just be user current location).

Step S506. The server apparatus returns information identifying the matched IoT objects to the user client.

Step S507. On the user client, the user accesses recommended IoT objects, or interacts with these objects via the IoT-object platform

Some example applications of embodiments of the invention will now be described.

Example Application 1 - Requirement Specification not based on explicit user input **Use Case: Proposal of a cold beverage or other cooling resource**

1. On a hot summer day, a user is passing by a place where there is a shared air/temperature monitoring device.
2. The authorized client app (user client) on a terminal carried by the user detects this shared air/temperature monitoring device, and retrieves data regarding the status of the environment surrounding the user from this air/temperature monitoring device by direct WIFI or Bluetooth connection.
3. The client app then sends the user's context (environment status and current position) to server apparatus in the cloud.
4. The cloud service analyzes the user's context, determines that the user may need some cold beverage or water for cooling, and after querying the IoT-object platform, informs the user of some IoT objects which may provide refreshment under the user's agreement, including:

 * a beverage machine (selling cold or iced drink) nearby
 * a water dispenser nearby
 * a swimming pool not far away.

5. Based on the IoT-resource information provided by the cloud, the user may find the beverage machine, and employ the user client to access a service of the beverage machine (here, which may be the menu), and finally buys a cold beverage.

Example Application 2 - Requirement Specification based on explicit user input and requirements inferred, by the cloud architecture, based on context

**Use Case: "I want to print my picture"**

1. A user wants to print some of their own pictures, and so opens the client app (user client) on their user device and inputs their requirement e.g. by typing in a message "I want to print my picture" on a keyboard.
2. The client app sends the user's request and current position to the server apparatus.
3. The server apparatus analyzes the user's input, determines that the user may need some printing service and, after querying the IoT-object platform, informs the user of some IoT objects that the user may select:

 * a connected and shared printer nearby
 * a printing shop (not connectable) nearby

4. The user chooses the shared printer in view of the close proximity of the printer and the cheap cost, having been informed by the server apparatus of the location and cost associated with each of the IoT objects.
5. Finally, the user finds the printer and pays for printing from the client app.

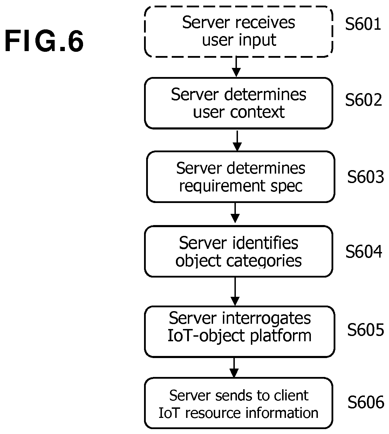

Fig.6 is a flow diagram illustrating steps in an example of a computer-implemented method according to an embodiment of the invention, implemented by server apparatus.

In the method of Fig.6, the server apparatus receives, from a user client, information representative of user input, and this information is indicative of a user requirement (S601). It should be noted that this step is optional, and the method may determine a user-requirement specification without explicit user input of a requirement. The server apparatus determines the user context (S602). The server apparatus determines a user requirement specification, based on the determined user context and, in the case where information representative of user input has been received from the user client, additionally based on such received information (S603). The server apparatus identifies one or more categories of IoT object that match the user requirement specification (S604). The server apparatus interrogates an IoT-object platform to identify IoT resource(s) that correspond to the identified one or more categories of IoT object (S605). The server apparatus sends, to the user client, information identifying the IoT resource(s) detected by the interrogating of the IoT-object-platform (S606).

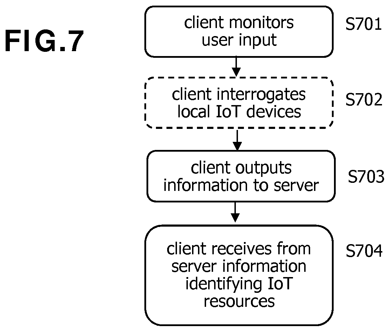

Fig.7 is a flow diagram illustrating steps in an example of a computer-implemented method according to an embodiment of the invention, implemented by a user client in a user device.

In the method of Fig.7, the user client on the user device monitors an input interface of the user client for user input indicative of a user requirement (S701). The user client interrogates IoT devices local to the user device to determine at least one item of information descriptive of the user context (S702). The user client outputs, to server apparatus, information representative of received user input indicative of a user requirement and information, received from interrogated IoT devices, indicative of the user context (S703). The user client receives, from the server apparatus, information identifying one or more IoT resources available to the user device and having properties adapted to satisfy a user requirement determined from the user context and, if provided, also from user input (S704).

Although the invention has been described above with reference to certain specific embodiments, it is to be understood that various modifications and adaptations may be made within the scope of the appended claims.

## Claims

1. A discovery system to discover Internet of Things resources for a user, the system comprising:

   a user client (2) implemented in a user device, the user client comprising a user input interface configured to receive user input indicative of a user requirement; a transmission unit configured to output, to a server apparatus, information indicative of received user input indicative of a user requirement; a client-side user-context identification unit to output, to the server apparatus, data characterizing a user context comprising one or more of: the user device's location, an aspect of the user's environment, environmental information obtained by sensors in the user device, and a user profile; a reception unit configured to receive, from the server apparatus, information identifying at least one Internet of Things resource available to the user device and having properties adapted to satisfy a user requirement determined by said server apparatus based on said user input and said data characterizing a user context, and information indicative of how to access said identified Internet of Things resource; and

   a server apparatus (3) comprising: means for receiving, from the transmission unit in the user client, the information indicative of user input received at the user client indicative of a user requirement;

      a user-context determination unit (34) to determine the data characterizing the user context based on the data characterizing the user context obtained from the user client;
      a user-requirement assessment unit (35) to determine a user requirement specification based on the data characterizing the user context determined by the user-context determination unit, and on the information indicative of user input indicative of a user requirement;
      a category identification unit (36) to identify at least one category of Internet of Things object that match the user requirement specification, an Internet of Things-object-platform interface (37) to interrogate an Internet of Things-object platform (4), to identify at least one Internet of Things resource that corresponds to the identified at least one or category of Internet of Things object, and
      an output unit (38) to send, to the user client, information identifying the at least one Internet of Things resource identified by the Internet of Things-object-platform interface and information indicative of how to access said identified Internet of Things resource.

2. The discovery system of claim 1, wherein the user client further comprises a communications unit (28) to interrogate Internet of Things devices local to the user device.

**3.** The discovery system of claim 2, wherein the communications unit (28) is configured to obtain information indicative of at least one aspect of the user context by interrogating Internet of Things devices local to the user device, and the user client comprises a client-side user-context identification unit to output, to the server apparatus, context information obtained from the interrogated Internet of Things devices.

**4.** The discovery system of claim 2 or 3, wherein the user client is configured to notify the server apparatus of Internet of Things devices interrogated by the communications unit (28), and the user-context determination unit (34) is configured to interrogate an Internet of Things-object platform to retrieve information, indicative of at least one aspect of the user context, generated by the Internet of Things devices identified in said notification.

**5.** The discovery system of any previous claim, wherein the user-requirement assessment unit (35) comprises a natural-language processing tool to determine user requirements by processing user input expressed in natural language.

**6.** The discovery system of any previous claim, wherein the category identification unit (36) comprises at least one of: a cognitive reasoning engine and a collaborative filtering unit.

**7.** The discovery system of any previous claim, wherein the Internet of Things-object-platform interface (37) is configured to interrogate the Internet of Things-object platform using adapted object categories mapped from the object categories identified by the category identification unit by a semantic matching unit, said semantic matching unit being configured to determine semantically matched Internet of Things object categories in the Internet of Things-object platform for the object categories of the category identification unit.

**8.** The discovery system of any previous claim, wherein the output unit (38) is further configured to:

    inform the user client only of Internet of Things resources that are available to the user, and
    send, to the user client, access information indicative of how to access the identified Internet of Things resources.

**9.** Server apparatus (3) comprising means for receiving, from a transmission unit in a user client, the information indicative of user input received at the user client indicative of a user requirement;

    a user-context determination unit (34) to determine data characterizing a user context, said data comprising one or more of: data indicative of the user device's location, data indicative of an aspect of the user's environment, environmental information obtained by sensors in the user device, and a user profile,
    a user-requirement assessment unit (35) to determine a user requirement specification based on the data characterizing the user context determined by the user-context determination unit and on the information indicative of user input indicative of a user requirement;
    a category identification unit (36) to identify at least one category of Internet of Things object that matches the user requirement specification,
    an Internet of Things-object-platform interface (37) to interrogate an Internet of Things-object platform, to identify at least one Internet of Things resource that corresponds to the identified at least one category of Internet of Things object, and
    an output unit (38) to send, to a user client implemented on a user device, information identifying the at least one Internet of Things resource identified by the Internet of Things-object-platform interface and information indicative of how to access said identified Internet of Things resource.

**10.** User device in which is implemented a user client (2) comprising :

    a user input interface (22) configured to receive user input indicative of a user requirement;
    a transmission unit (24) configured to output, to a server apparatus, information indicative of received user input indicative of a user requirement;
    a client-side user-context identification unit (27) to output, to the server apparatus, data characterizing a user context comprising one or more of: the user device's location, an aspect of the user's environment, environmental information obtained by sensors in the user device, and a user profile;
    a reception unit (26) configured to receive, from the server apparatus, information identifying at least one Internet of Things resource available to the user device and having properties adapted to satisfy a user requirement determined by said server apparatus based on said user input and said data characterizing a user context, and information indicative of how to access said identified Internet of Things resource.

11. A computer-implemented method performed by server apparatus, comprising receiving, from a transmission unit in a user client, the information indicative of user input received at the user client indicative of a user requirement;

determining (S602) data characterizing a user context, said data comprising one or more of: data indicative of the user device's location, data indicative of an aspect of the user's environment, environmental information obtained by sensors in the user device, and a user profile,
determining (S603) a user requirement specification based on the determined data characterizing the user context unit and on the information indicative of user input indicative of a user requirement;
identifying (S604) at least one category of Internet of Things object that matches the user requirement specification,
interrogating (S605) an Internet of Things-object platform to identify at least one Internet of Things resource that corresponds to the identified at least one category of Internet of Things object, and
sending (S606), to a user client implemented on a user device, information identifying the at least one Internet of Things resource identified by the interrogating of the Internet of Things-object-platform and information indicative of how to access said identified Internet of Things resource.

12. A computer program comprising instructions which, when executed by a processor of a user device, cause the user device to implement a user client (2) performing a method comprising the steps for which each entity comprised in the user device according to claim 10 is configured to perform.

13. A computer-implemented method, performed by a user client (2) on a user device, comprising the steps for which each entity comprised in the user device according to claim 10 is configured to perform.

**Patentansprüche**

1. Entdeckungssystem zum Entdecken von Internet-der-Dinge-Ressourcen für einen Benutzer, wobei das System umfasst:
einen Benutzer-Client (2), der in einer Benutzervorrichtung implementiert wird, wobei der Benutzer-Client umfasst:

eine Benutzereingabeschnittstelle, die zum Empfangen einer Benutzereingabe ausgelegt ist, die eine Benutzeranforderung angibt;
eine Übertragungseinheit, die zum Ausgeben, an eine Servereinrichtung, von Informationen ausgelegt ist, die eine empfangene Benutzereingabe angeben, die eine Benutzeranforderung angibt;
eine client-seitige Benutzerkontextidentifikationseinheit zum Ausgeben, an die Servereinrichtung, von Daten, die einen Benutzerkontext charakterisieren, der eines oder mehrere von Folgendem umfasst: den Standort der Benutzervorrichtung, einen Aspekt der Umgebung des Benutzers, Umgebungsinformationen, die durch Sensoren in der Benutzervorrichtung erhalten werden, und ein Benutzerprofil;
eine Empfangseinheit, die zum Empfangen, von der Servereinrichtung, von Informationen, die mindestens eine Internet-der-Dinge-Ressource identifizieren, die für die Benutzervorrichtung verfügbar ist und Eigenschaften aufweist, die zum Erfüllen einer Benutzeranforderung eingerichtet sind, die durch die Servereinrichtung basierend auf der Benutzereingabe und den Daten, die einen Benutzerkontext charakterisieren, bestimmt wird, und Informationen, die angeben, wie auf die identifizierte Internet-der-Dinge-Ressource zugegriffen werden kann, ausgelegt ist;

und eine Servereinrichtung (3), die umfasst:

Mittel zum Empfangen, von der Übertragungseinheit im Benutzer-Client, der Informationen, die eine Benutzereingabe angeben, die am Benutzer-Client empfangen wird und eine Benutzeranforderung angibt;
eine Benutzerkontextbestimmungseinheit (34) zum Bestimmen der Daten, die den Benutzerkontext charakterisieren, basierend auf den Daten, die den Benutzerkontext charakterisieren, der vom Benutzer-Client erhalten wird;
eine Benutzeranforderungsbeurteilungseinheit (35) zum Bestimmen einer Benutzeranforderungsspezifikation basierend auf den Daten, die den Benutzerkontext charakterisieren, der durch die Benutzerkontextbestimmungseinheit bestimmt wird, und auf den Informationen, die die Benutzereingabe angeben, die eine Benutzeranforderung angibt;
eine Kategorieidentifikationseinheit (36) zum Identifizieren mindestens einer Kategorie von Internet-der-Dinge-Objekt, die mit der Benutzeranforderungsspezifikation übereinstimmt, eine Internet-der-Dinge-Objektplattform-

**12**

schnittstelle (37) zum Befragen einer Internet-der-Dinge-Objektplattform (4), um mindestens eine Internet-der-Dinge-Ressource zu identifizieren, die der identifizierten mindestens einen Kategorie von Internet-der-Dinge-Objekt entspricht, und

eine Ausgabeeinheit (38) zum Senden, an den Benutzer-Client, von Informationen, die die mindestens eine Internet-der-Dinge-Ressource identifizieren, die durch die Internet-der-Dinge-Objektplattformschnittstelle identifiziert wird, und Informationen, die angeben, wie auf die identifizierte Internet-der-Dinge-Ressource zugegriffen werden kann.

2. Entdeckungssystem nach Anspruch 1, wobei der Benutzer-Client ferner eine Kommunikationseinheit (28) zum Befragen von Internet-der-Dinge-Vorrichtungen umfasst, die sich lokal zu der Benutzervorrichtung befinden.

3. Entdeckungssystem nach Anspruch 2, wobei die Kommunikationseinheit (28) zum Erhalten von Informationen ausgelegt ist, die mindestens einen Aspekt des Benutzerkontexts angeben, durch Befragen von Internet-der-Dinge-Vorrichtungen, die sich lokal zu der Benutzervorrichtung befinden, und der Benutzer-Client eine client-seitige Benutzerkontextidentifikationseinheit zum Ausgeben, an die Servereinrichtung, von Kontextinformationen umfasst, die von den befragten Internet-der-Dingen-Vorrichtungen erhalten werden.

4. Entdeckungssystem nach Anspruch 2 oder 3, wobei der Benutzer-Client ausgelegt ist zum Benachrichtigen der Servereinrichtung über Internet-der-Dinge-Vorrichtungen, die durch die Kommunikationseinheit (28) befragt werden, und die Benutzerkontextidentifikationseinheit (34) ausgelegt ist zum Befragen einer Internet-der-Dinge-Objektplattform, um Informationen abzurufen, die mindestens einen Aspekt des Benutzerkontexts angeben und durch die Internet-der-Dinge-Vorrichtungen erzeugt werden, die in der Benachrichtigung identifiziert werden.

5. Entdeckungssystem nach einem vorherigen Anspruch, wobei die Benutzeranforderungsbeurteilungseinheit (35) ein Tool zur Verarbeitung natürlicher Sprache umfasst, um Benutzeranforderungen durch die Verarbeitung einer Benutzereingabe zu bestimmen, die in natürlicher Sprache ausgedrückt wird.

6. Entdeckungssystem nach einem vorherigen Anspruch, wobei die Kategorieidentifikationseinheit (36) mindestens eines von Folgendem umfasst: eine Kognitives-Denken-Engine und eine kollaborative Filtereinheit.

7. Entdeckungssystem nach einem vorherigen Anspruch, wobei die Internet-der-Dinge-Objektplattformschnittstelle (37) ausgelegt ist zum Befragen der Internet-der-Dinge-Objektplattform unter Verwendung angepasster Objektkategorien, die aus den Objektkategorien, die durch die Kategorieidentifikationseinheit identifiziert werden, durch eine Semantisches-Matching-Einheit abgebildet werden, wobei die Semantisches-Matching-Einheit ausgelegt ist zum Bestimmen semantisch abgeglichener Internet-der-Dinge-Objektkategorien in der Internet-der-Dinge-Objektplattform für die Objektkategorien der Kategorieidentifikationseinheit.

8. Entdeckungssystem nach einem vorherigen Anspruch, wobei die Ausgabeeinheit (38) ferner ausgelegt ist zum:

Informieren des Benutzer-Clients nur über Internet-der-Dinge-Ressourcen, die für den Benutzer verfügbar sind, und

Senden, an den Benutzer-Client, von Zugriffsinformationen, die angeben, wie auf die identifizierten Internet-der-Dinge-Ressourcen zugegriffen werden kann.

9. Servereinrichtung (3), die Mittel zum Empfangen, von einer Übertragungseinheit in einem Benutzer-Client, der Informationen umfasst, die eine Benutzereingabe angeben, die am Benutzer-Client empfangen wird und eine Benutzeranforderung angibt;

eine Benutzerkontextbestimmungseinheit (34) zum Bestimmen von Daten, die einen Benutzerkontext charakterisieren, wobei die Daten eines oder mehrere von Folgendem umfassen: Daten, die den Standort der Benutzervorrichtung angeben, Daten, die einen Aspekt der Umgebung des Benutzers angeben, Umgebungsinformationen, die durch Sensoren in der Benutzervorrichtung erhalten werden, und ein Benutzerprofil,

eine Benutzeranforderungsbeurteilungseinheit (35) zum Bestimmen einer Benutzeranforderungsspezifikation basierend auf den Daten, die den Benutzerkontext charakterisieren, der durch die Benutzerkontextbestimmungseinheit bestimmt wird, und auf den Informationen, die die Benutzereingabe angeben, die eine Benutzeranforderung angibt;

eine Kategorieidentifikationseinheit (36) zum Identifizieren mindestens einer Kategorie von Internet-der-Dinge-Objekt, die mit der Benutzeranforderungsspezifikation übereinstimmt,

eine Internet-der-Dinge-Objektplattformschnittstelle (37) zum Befragen einer Internet-der-Dinge-Objektplattform, um mindestens eine Internet-der-Dinge-Ressource zu identifizieren, die der identifizierten mindestens einen Kategorie von Internet-der-Dinge-Objekt entspricht, und

eine Ausgabeeinheit (38) zum Senden, an einen Benutzer-Client, der auf einer Benutzervorrichtung implementiert wird, von Informationen, die die mindestens eine Internet-der-Dinge-Ressource identifizieren, die durch die Internet-der-Dinge-Objektplattformschnittstelle identifiziert wird, und Informationen, die angeben, wie auf die identifizierte Internet-der-Dinge-Ressource zugegriffen werden kann.

**10.** Benutzervorrichtung, in der ein Benutzer-Client (2) implementiert wird, umfassend:

eine Benutzereingabeschnittstelle (22), die ausgelegt ist zum Empfangen einer Benutzereingabe, die eine Benutzeranforderung angibt;

eine Übertragungseinheit (24), die ausgelegt ist zum Ausgeben, an eine Servereinrichtung, von Informationen, die eine empfangene Benutzereingabe angeben, die eine Benutzeranforderung angibt;

eine client-seitige Benutzerkontextidentifikationseinheit (27) zum Ausgeben, an die Servereinrichtung, von Daten, die einen Benutzerkontext charakterisieren, der eines oder mehrere von Folgendem umfasst: den Standort der Benutzervorrichtung, einen Aspekt der Umgebung des Benutzers, Umgebungsinformationen, die durch Sensoren in der Benutzervorrichtung erhalten werden, und ein Benutzerprofil;

eine Empfangseinheit (26), die ausgelegt ist zum Empfangen, von der Servereinrichtung, von Informationen, die mindestens eine Internet-der-Dinge-Ressource identifizieren, die für die Benutzervorrichtung verfügbar ist und Eigenschaften aufweist, die zum Erfüllen einer Benutzeranforderung eingerichtet sind, die durch die Servereinrichtung basierend auf der Benutzereingabe und den Daten, die einen Benutzerkontext charakterisieren, bestimmt wird, und Informationen, die angeben, wie auf die identifizierte Internet-der-Dinge-Ressource zugegriffen werden kann.

**11.** Computerimplementiertes Verfahren, das durch eine Servereinrichtung durchgeführt wird, umfassend Empfangen, von einer Übertragungseinheit in einem Benutzer-Client, der Informationen, die eine Benutzereingabe angeben, die am Benutzer-Client empfangen wird und eine Benutzeranforderung angibt;

Bestimmen (S602) von Daten, die einen Benutzerkontext charakterisieren, wobei die Daten eines oder mehrere von Folgendem umfassen: Daten, die den Standort der Benutzervorrichtung angeben, Daten, die einen Aspekt der Umgebung des Benutzers angeben, Umgebungsinformationen, die durch Sensoren in der Benutzervorrichtung erhalten werden, und ein Benutzerprofil,

Bestimmen (S603) einer Benutzeranforderungsspezifikation basierend auf den bestimmten Daten, die die Benutzerkontexteinheit charakterisieren, und auf den Informationen, die eine Benutzereingabe angeben, die eine Benutzeranforderung angibt;

Identifizieren (S604) mindestens einer Kategorie von Internet-der-Dinge-Objekt, die mit der Benutzeranforderungsspezifikation übereinstimmt, Befragen (S605) einer Internet-der-Dinge-Objektplattform, um mindestens eine Internet-der-Dinge-Ressource zu identifizieren, die der identifizierten mindestens einen Kategorie von Internet-der-Dinge-Objekt entspricht, und

Senden (S606), an einen Benutzer-Client, der auf einer Benutzervorrichtung implementiert wird, von Informationen, die die mindestens eine Internet-der-Dinge-Ressource identifizieren, die durch das Befragen der Internet-der-Dinge-Objektplattform identifiziert wird, und Informationen, die angeben, wie auf die identifizierte Internet-der-Dinge-Ressource zugegriffen werden kann.

**12.** Computerprogramm, das Anweisungen umfasst, die, wenn sie durch einen Prozessor einer Benutzervorrichtung ausgeführt werden, veranlassen, dass die Benutzervorrichtung einen Benutzer-Client (2) implementiert, der ein Verfahren durchführt, das die Schritte umfasst, für die jede in der Benutzervorrichtung nach Anspruch 10 enthaltene Entität zur Durchführung ausgelegt ist.

**13.** Computerimplementiertes Verfahren, das durch einen Benutzer-Client (2) auf einer Benutzervorrichtung durchgeführt wird, umfassend die Schritte, für die jede in der Benutzervorrichtung nach Anspruch 10 enthaltene Entität zur Durchführung ausgelegt ist.

**Revendications**

**1.** Système de découverte permettant de découvrir des ressources de l'Internet des objets pour un utilisateur, le système comprenant :

un client utilisateur (2) mis en œuvre dans un dispositif d'utilisateur, le client utilisateur comprenant

une interface d'entrée d'utilisateur configurée pour recevoir une entrée d'utilisateur indicative d'un besoin de l'utilisateur ;
une unité de transmission configurée pour délivrer en sortie, vers un appareil serveur, des informations indicatives d'une entrée d'utilisateur reçue indicative d'un besoin de l'utilisateur ;
une unité d'identification de contexte d'utilisateur côté client pour délivrer en sortie, vers l'appareil serveur, des données caractérisant un contexte d'utilisateur comprenant un ou plusieurs des éléments suivants : l'emplacement du dispositif d'utilisateur, un aspect de l'environnement de l'utilisateur, des informations environnementales obtenues par des capteurs dans le dispositif d'utilisateur, et un profil d'utilisateur ;
une unité de réception configurée pour recevoir, de l'appareil serveur, des informations identifiant au moins une ressource de l'Internet des objets disponible pour le dispositif d'utilisateur et ayant des propriétés adaptées pour satisfaire un besoin de l'utilisateur déterminé par ledit appareil serveur sur la base de ladite entrée d'utilisateur et desdites données caractérisant un contexte d'utilisateur, et des informations indiquant comment accéder à ladite ressource identifiée de l'Internet des objets ;

et un appareil serveur (3) comprenant :

des moyens pour recevoir, depuis l'unité de transmission dans le client utilisateur, les informations indicatives de l'entrée d'utilisateur reçue au niveau du client utilisateur indiquant un besoin de l'utilisateur ;
une unité de détermination du contexte de l'utilisateur (34) pour déterminer les données caractérisant le contexte de l'utilisateur sur la base des données caractérisant le contexte de l'utilisateur obtenues du client utilisateur ;
une unité d'évaluation des besoins de l'utilisateur (35) pour déterminer une spécification de besoin de l'utilisateur sur la base des données caractérisant le contexte de l'utilisateur déterminées par l'unité de détermination du contexte de l'utilisateur, et sur la base des informations indiquant l'entrée de l'utilisateur indiquant un besoin de l'utilisateur ;
une unité d'identification de catégorie (36) pour identifier au moins une catégorie d'objets de l'Internet des objets correspondant à la spécification de besoin de l'utilisateur, une interface de plateforme d'objets de l'Internet des objets (37) pour interroger une plateforme d'objets de l'Internet des objets (4), afin d'identifier au moins une ressource de l'Internet des objets correspondant à au moins un objet identifié ou une catégorie d'objets identifiés de l'Internet des objets, et
une unité de sortie (38) pour envoyer, au client utilisateur, des informations identifiant l'au moins une ressource de l'Internet des objets identifiée par l'interface plateforme d'objets de l'Internet des objets et des informations indicatives de la manière d'accéder à ladite ressource identifiée de l'Internet des objets.

2. Système de découverte selon la revendication 1, dans lequel le client utilisateur comprend en outre une unité de communication (28) pour interroger les dispositifs de l'Internet des objets situés localement par rapport au dispositif d'utilisateur.

3. Système de découverte selon la revendication 2, dans lequel l'unité de communication (28) est configurée pour obtenir des informations indicatives d'au moins un aspect du contexte de l'utilisateur en interrogeant les dispositifs de l'Internet des objets situés localement par rapport au dispositif de l'utilisateur, et le client de l'utilisateur comprend une unité d'identification du contexte de l'utilisateur côté client pour délivrer en sortie, à l'appareil serveur, les informations de contexte obtenues à partir des dispositifs interrogés de l'Internet des objets.

4. Système de découverte selon la revendication 2 ou la revendication 3, dans lequel le client utilisateur est configuré pour notifier à l'appareil serveur les dispositifs de l'Internet des objets interrogés par l'unité de communication (28), et l'unité de détermination du contexte de l'utilisateur (34) est configurée pour interroger une plateforme d'objets de l'Internet des objets afin de récupérer des informations, indicatives d'au moins un aspect du contexte de l'utilisateur, générées par les dispositifs de l'Internet des objets identifiés dans ladite notification.

5. Système de découverte selon l'une quelconque des revendications précédentes, dans lequel l'unité d'évaluation des besoins de l'utilisateur (35) comprend un outil de traitement du langage naturel pour déterminer les besoins de l'utilisateur en traitant une entrée de l'utilisateur exprimée en langage naturel.

6. Système de découverte selon l'une quelconque des revendications précédentes, dans lequel l'unité d'identification de catégorie (36) comprend au moins l'un des éléments suivants : un moteur de raisonnement cognitif et une unité de filtrage collaboratif.

7. Système de découverte selon l'une quelconque des revendications précédentes, dans lequel l'interface de plateforme d'objets de l'Internet des objets (37) est configurée pour interroger la plateforme d'objets de l'Internet des objets à l'aide de catégories d'objets adaptées mappées à partir des catégories d'objets identifiées par l'unité d'identification de catégories par une unité d'appariement sémantique, ladite unité d'appariement sémantique étant configurée pour déterminer des catégories d'objets de l'Internet des objets sémantiquement appariées dans la plateforme d'objets de l'Internet des objets pour les catégories d'objets de l'unité d'identification de catégories.

8. Système de découverte selon l'une quelconque des revendications précédentes, dans lequel l'unité de sortie (38) est en outre configurée pour :

   informer le client utilisateur uniquement des ressources de l'Internet des objets qui sont disponibles pour l'utilisateur, et
   envoyer au client utilisateur des informations d'accès indiquant comment accéder aux ressources identifiées de l'Internet des objets.

9. Appareil serveur (3) comprenant

   des moyens pour recevoir, à partir d'une unité de transmission dans un client utilisateur, les informations indicatives d'une entrée d'utilisateur reçue au niveau du client utilisateur indiquant un besoin de l'utilisateur ;
   une unité de détermination du contexte de l'utilisateur (34) pour déterminer les données caractérisant un contexte de l'utilisateur, lesdites données comprenant un ou plusieurs des éléments suivants : des données indicatives de l'emplacement du dispositif de l'utilisateur, des données indicatives d'un aspect de l'environnement de l'utilisateur, des informations environnementales obtenues par des capteurs dans le dispositif de l'utilisateur, et un profil de l'utilisateur,
   une unité d'évaluation des besoins de l'utilisateur (35) pour déterminer une spécification de besoin de l'utilisateur sur la base des données caractérisant le contexte de l'utilisateur déterminé par l'unité de détermination du contexte de l'utilisateur et sur la base des informations indicatives de l'entrée de l'utilisateur indiquant un besoin de l'utilisateur ;
   une unité d'identification de catégorie (36) pour identifier au moins une catégorie d'objet de l'Internet des objets qui correspond à la spécification de besoin de l'utilisateur,
   une interface de plateforme d'objets de l'Internet des objets (37) pour interroger une plateforme d'objets de l'Internet des objets afin d'identifier au moins une ressource de l'Internet des objets correspondant à la catégorie identifiée d'objets de l'Internet des objets, et
   une unité de sortie (38) pour envoyer, à un client utilisateur mis en œuvre sur un dispositif d'utilisateur, des informations identifiant l'au moins une ressource de l'Internet des objets identifiée par l'interface de plateforme d'objets de l'Internet des objets et des informations indicatives de la manière d'accéder à ladite ressource identifiée de l'Internet des objets.

10. Dispositif d'utilisateur dans lequel est mis en œuvre un client utilisateur (2) comprenant :

    une interface d'entrée d'utilisateur (22) configurée pour recevoir une entrée d'utilisateur indicative d'un besoin de l'utilisateur ;
    une unité de transmission (24) configurée pour délivrer en sortie, vers un appareil serveur, des informations indicatives de l'entrée d'utilisateur reçue indiquant un besoin d'utilisateur ;
    une unité d'identification du contexte de l'utilisateur côté client (27) pour délivrer en sortie à l'appareil serveur des données caractérisant un contexte de l'utilisateur comprenant un ou plusieurs des éléments suivants : l'emplacement du dispositif de l'utilisateur, un aspect de l'environnement de l'utilisateur, des informations environnementales obtenues par des capteurs dans le dispositif de l'utilisateur, et un profil de l'utilisateur ;
    une unité de réception (26) configurée pour recevoir, depuis l'appareil serveur, des informations identifiant au moins une ressource de l'Internet des objets disponible pour le dispositif d'utilisateur et ayant des propriétés adaptées pour satisfaire un besoin d'utilisateur déterminé par ledit appareil serveur sur la base de ladite entrée d'utilisateur et desdites données caractérisant un contexte de l'utilisateur, et des informations indiquant comment accéder à ladite ressource identifiée de l'Internet des objets.

**11.** Procédé mis en œuvre par ordinateur exécuté par un appareil serveur, le procédé comprenant les étapes suivantes : recevoir, à partir d'une unité de transmission dans un client utilisateur, les informations indicatives d'une entrée d'utilisateur reçue au niveau du client utilisateur indiquant un besoin de l'utilisateur ;

déterminer (S602) des données caractérisant un contexte d'utilisateur, lesdites données comprenant un ou plusieurs des éléments suivants : des données indicatives de l'emplacement du dispositif d'utilisateur, des données indicatives d'un aspect de l'environnement de l'utilisateur, des informations environnementales obtenues par des capteurs dans le dispositif d'utilisateur, et un profil d'utilisateur,

déterminer (S603) une spécification de besoin d'utilisateur sur la base des données déterminées caractérisant l'unité de contexte de l'utilisateur et des informations indicatives d'une entrée de l'utilisateur indiquant un besoin de l'utilisateur ;

identifier (S604) au moins une catégorie d'objets de l'Internet des objets qui correspond à la spécification de besoin de l'utilisateur,

interroger (S605) une plateforme d'objets de l'Internet des objets pour identifier au moins une ressource de l'Internet des objets qui correspond à l'au moins une catégorie d'objets identifiée de l'Internet des objets, et

envoyer (S606), à un client utilisateur mis en œuvre sur un dispositif d'utilisateur, des informations identifiant l'au moins une ressource de l'Internet des objets identifiée par l'interrogation de la plateforme d'objets de l'Internet des objets et des informations indicatives de la manière d'accéder à ladite ressource identifiée de l'Internet des objets.

**12.** Programme informatique comprenant des instructions qui, lorsqu'elles sont exécutées par un processeur d'un dispositif d'utilisateur, amènent le dispositif d'utilisateur à mettre en œuvre un client utilisateur (2) exécutant un procédé comprenant les étapes que chaque entité comprise dans le dispositif d'utilisateur selon la revendication 10 est configurée pour exécuter.

**13.** Procédé mis en œuvre par ordinateur, exécuté par un client utilisateur (2) sur un dispositif d'utilisateur, comprenant les étapes que chaque entité comprise dans le dispositif d'utilisateur selon la revendication 10 est configurée pour exécuter.

FIG.1

# FIG.2

EP 3 857 861 B1

# FIG.3

| User context and intention | Knowledge graph | Recommend categories |

# FIG.4

Client monitors user input — S401

Client determines user context info. — S401a

User client outputs information to server — S402

Server receives information — S403

Server determines user context — S404

Server determines requirement spec — S405

Server identifies object categories — S406

Server interrogates IoT object platform — S407

Server sends to client IoT resource information — S408

## FIG.5

User client        Server apparatus        IoT Object Platform        3rd information Source

**S501**
user inputs by text or voice

**S501**
detects nearby objects, and read object data directly if possible

{user requirement by text, user contexts}

**S502**

**S503**
analyze user intention and target entities

replenish user contexts by nearby devices' data via IoT object platform

replenish user contexts by environment data from 3rd sources

**S504**
deduce object category list which may satisfy user requirement

**S505**
query objects (and access means) according to user current location, or target location and time

**S506**
List of identified IoT resources (and access means)

**S507**
access to objects or their services via IoT object platform

EP 3 857 861 B1

**FIG.6**

Server receives
user input — S601

Server determines
user context — S602

Server determines
requirement spec — S603

Server identifies
object categories — S604

Server interrogates
IoT-object platform — S605

Server sends to client
IoT resource information — S606

**FIG.7**

client monitors
user input — S701

client interrogates
local IoT devices — S702

client outputs
information to server — S703

client receives from
server information
identifying IoT
resources — S704

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015019342 A1

### Non-patent literature cited in the description

- *ETSI Draft, CIM(17)009003R1,* 11 April 2017, 1-21
- **SAMEH BEN FREDJ ; MATHIEU BOUSSARD ; DANIEL KOFMAN ; LUDOVIC NOIRIE.** Efficient semantic-based IoT service discovery mechanism for dynamic environments. *IEEE 25th Annual International Symposium on Personal, Indoor, and Mobile Radio Communication (PIMRC), 2014,* September 2014, 2088-2092
- **STEFANA CHIRILA ; CAMELIA LEMNARU ; MIHAELA DINSOREANU.** Semantic-based IoT device discovery and recommendation mechanism. *IEEE ICCP,* 2016
- **MUHAMMAD GOLAM KIBRIA et al.** New proposal for clause XX of D3.3 (Framework to support data interoperability in IoT environments); DPM-I-084. *ITU-T Draft,* 2017
- **SINGHAL, AMIT.** Introducing the Knowledge Graph: Things, Not Strings. *Wikipedia,* 16 May 2012, https://en.wikipedia.org/wiki/Knowledge_Graph
- **TOMAS MIKOLOV ; KAI CHEN ; GREG CORRADO ; JEFFREY DEAN.** Efficient Estimation of Word Representations in Vector Space. *Proceedings of Workshop at ICLR,* 2013
- **TOMAS MIKOLOV ; ILYA SUTSKEVER ; KAI CHEN ; GREG CORRADO ; JEFFREY DEAN.** Distributed Representations of Words and Phrases and their Compositionality. *Proceedings of NIPS,* 2013
- **QUOC LE ; TOMAS MIKOLOV.** *Distributed Representations of Sentences and Documents*
- **JEFFREY PENNINGTON ; RICHARD SOCHER ; CHRISTOPHER D. MANNING.** *Global Vectors for Word Representation,* https://nlp.stanford.edu/projects/glove